# EUROPEAN PATENT SPECIFICATION

(11) **EP 2 541 070 B1**
(45) Date of publication and mention of the grant of the patent: **24.11.2021**
(21) Application number: 11747000.5
(22) Date of filing: 17.02.2011
(51) Int. Cl.: B60L 50/60, E02F 9/20, E02F 9/22, F15B 11/16

(54) **HYDRAULIC PRESSURE CONTROL DEVICE**
HYDRAULISCHE DRUCKSTEUERVORRICHTUNG
DISPOSITIF DE COMMANDE DE PRESSION HYDRAULIQUE

(30) Priority: 23.02.2010 JP 2010037514
(43) Date of publication of application: 02.01.2013
(73) Proprietor: Takeuchi Mfg. Co., Ltd., Nagano 389-0605 (JP)
(72) Inventor: KUMEUCHI, Kengo, Hanishina-gun Nagano 389-0605 (JP); SHIMIZU, Kouichi, Hanishina-gun Nagano 389-0605 (JP)
(74) Representative: Patentwerk B.V.
(86) International application number: PCT/JP2011/000865
(87) International publication number: WO 2011/105027

(56) References cited:
- EP-A1- 2 031 135
- WO-A1-2009/145681
- JP-A- 9 088 839
- JP-A- 2001 012 418
- JP-A- 2003 074 517
- JP-A- 2008 256 037
- JP-A- 2008 256 037

## Description

### TECHNICAL FIELD

The present invention relates to a hydraulic pressure control device used primarily in construction machines, such as shown in JP 2008 256037 A.

### TECHNICAL BACKGROUND

Power shovels and other construction machines are examples of machines that use a hydraulic pressure control device having a configuration in which a hydraulic pump is driven by an engine and hydraulic oil supplied from the hydraulic pump is used to actuate a hydraulic actuator. Possible examples of the hydraulic actuator include a hydraulic motor, a hydraulic cylinder, and the like. By actuating these hydraulic actuators using a hydraulic pressure control device in, e.g., a construction machine, the cylinder of a travel device, revolving device, boom, arm, bucket, or other component is actuated to perform various types of work such as traveling and excavating. In addition to traveling and excavating, a power shovel also performs work such as revolving a vehicle and moving earth.

In a hydraulic pressure control device of a construction machine such as the one described above, use of a load sensing system is commonly known (see Patent Document 1, for example), wherein a feedback signal is outputted from the hydraulic actuator to the hydraulic pump, the load pressure of the hydraulic actuator is led to the hydraulic pump, and the discharge rate of the hydraulic pump is changed so as to maintain a constant pressure difference with the load pressure. A possible example of the method for controlling the discharge rate of the hydraulic pump is a method for changing the swashplate angle of the hydraulic pump.

### PRIOR ART

Patent Document 1: Japanese Laid-open Patent Publication No. 2009-287744(A). The present invention relates to a hydraulic pressure control device, comprising a hydraulic pump for discharging hydraulic oil, an electric motor for driving the hydraulic pump, at least one hydraulic actuator driven by the hydraulic oil discharged from the hydraulic pump, hydraulic actuator operation means operable to control actuation of the at least one hydraulic actuator, discharge pressure detection means for detecting the discharge pressure of the hydraulic oil discharged by the hydraulic pump hydraulic oil pressure detection means for detecting the hydraulic oil pressure of the hydraulic actuator, electric power supply means for supplying electric power to the electric motor and driving the electric motor and a controller for determining a pressure difference between the discharge pressure of the hydraulic pump detected by the discharge pressure detection means and the hydraulic oil pressure of the hydraulic actuator detected by the hydraulic oil pressure detection means and for controlling the supply of electric power to the electric motor by the electric power supply means so that the pressure difference reaches a predetermined set value, to control the driving of the hydraulic pump by the electric motor.

### PROBLEMS TO BE SOLVED BY THE INVENTION

In the hydraulic pressure control device described above, a method is used for transmitting the load pressure of the hydraulic actuator to the hydraulic pump and changing the swashplate angle of the hydraulic pump. Thus, when the hydraulic pressure is used as the feedback signal, a problem is presented in regard to hunting caused by the hydraulic pump reacting sensitively even to minute changes in the hydraulic pressure. When the hydraulic pump is driven by the engine as described above, the engine speed is constantly being set by the operation of the operator, and the engine is thus constantly being driven at the set speed even when no particular flow rate of hydraulic oil is needed in the hydraulic actuators. Accordingly, a problem has been presented in regard to energy being consumed needlessly.

The present invention was devised in view of problems such as those described above, it being an object of the present invention to provide a hydraulic pressure control device comprising a hydraulic pump driven by an electric motor, wherein the hydraulic pump and other components are stably activated and energy conservation is achieved.

### MEANS TO SOLVE THE PROBLEMS

To solve the problems described above, the hydraulic pressure control device according to the present invention comprises pressure difference operation means operable in order to variably set the set value, and configured so that information showing the set value set by the operation of the pressure difference operation means is sent to the controller, the controller being adapted to control the supply of electric power to the electric motor by the electric power supply means to control the driving of the hydraulic pump by the electric motor so that the pressure difference between the discharge pressure of the hydraulic pump detected by the discharge pressure detection means and the hydraulic oil pressure of the hydraulic actuator detected by the hydraulic oil pressure detection means reaches the set value that has been set by the operation of the pressure difference operation means.

### ADVANTAGEOUS EFFECTS OF THE INVENTION

Due to the provision of the pressure difference operation means operated to set the difference value, the driver can manually shift the difference value and adjust the amount of the discharge pressure of the hydraulic pump relative to the load pressure of the hydraulic actuator to smoothly perform work in a state of high operability even when a large amount of electric power is needed, and the driver can reduce the difference of the discharge pressure relative to the load pressure to minimize needless energy consumption when electric power is not needed at times such as idling, ground leveling work, and suspension work.

### BRIEF DESCRIPTION OF THE DRAWINGS

FIG. 1 is a perspective view of a power shovel representing an example of a machine to which the hydraulic pressure control device according to the present invention is applied; and
FIG. 2 is a block diagram showing a hydraulic pressure circuit and an electrical circuit, representing the hydraulic pressure control device according to the present invention.

### DESCRIPTION OF THE EMBODIMENTS

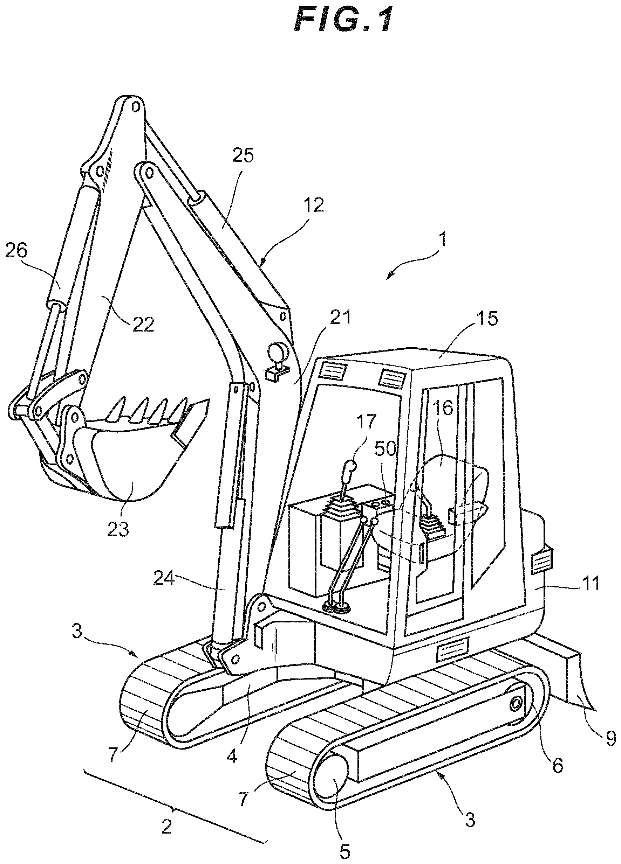

An embodiment of the hydraulic pressure control device according to the present invention is described below with reference being made to the accompanying drawings. FIG. 1 shows a crawler-type power shovel 1 as an example of a construction machine to which the hydraulic pressure control device according to the present invention is applied. This power shovel 1 is configured from a travel device 2 configured with travel mechanisms 3, 3 provided to the left and right of a travel carriage 4 (a vehicle body) having the shape of an H as viewed from above, a blade 9 provided in a vertically swingable manner to the rear part of the travel carriage 4, a revolving base 11 revolvably provided to the top part of the travel carriage 4, a shovel mechanism 12 provided to the front part of the revolving base 11, and an operator cabin 15 (a vehicle body) for a driver to occupy, the operator cabin being erected on the top part of the revolving base 11.

The pair of left and right travel mechanisms 3, 3 constituting the travel device 2 are configured using crawler belts 7 wrapped around drive sprocket wheels 5 provided to the left and right front parts of the travel carriage 4 and idler wheels 6 provided to the left and right rear parts of the travel carriage 4. The drive sprocket wheels 5 are rotatably driven by a traveling motor 36 (described below) driven by hydraulic pressure. The blade 9 is swung by the actuation of a hydraulically driven blade cylinder (not shown). The revolving base 11 is revolvably driven by a revolving motor (not shown) composed of an electric motor or a hydraulic motor.

The shovel mechanism 12 is configured from: a boom 21 pivotally connected to the front part of the revolving base 11 so as to be capable of rising and falling movement; an arm 22 pivotally connected to the distal end of the boom 21 so as to be capable of swinging up and down in the plane where the boom 21 rises and falls; a bucket 23 pivotally connected to the distal end of the arm 22 so as to be capable of swinging up and down; and a boom cylinder 24, arm cylinder 25, and bucket cylinder 26 which are hydraulically driven. The boom 21 is raised and lowered by the boom cylinder 24, the arm 22 is swung up and down by the arm cylinder 25, and the bucket 23 is swung by the bucket cylinder 26. In the following description, these cylinders 24 to 26 and the blade cylinder of the blade 9 are collectively referred to as the "group of hydraulic cylinders 35." The operator cabin 15 is formed in the shape of a rectangular box enclosed on all sides, the interior of which provided with an operator seat 16 for the driver to sit, and an operating device 17 for performing the actuated operation of the travel device 2 and the shovel mechanism 12.

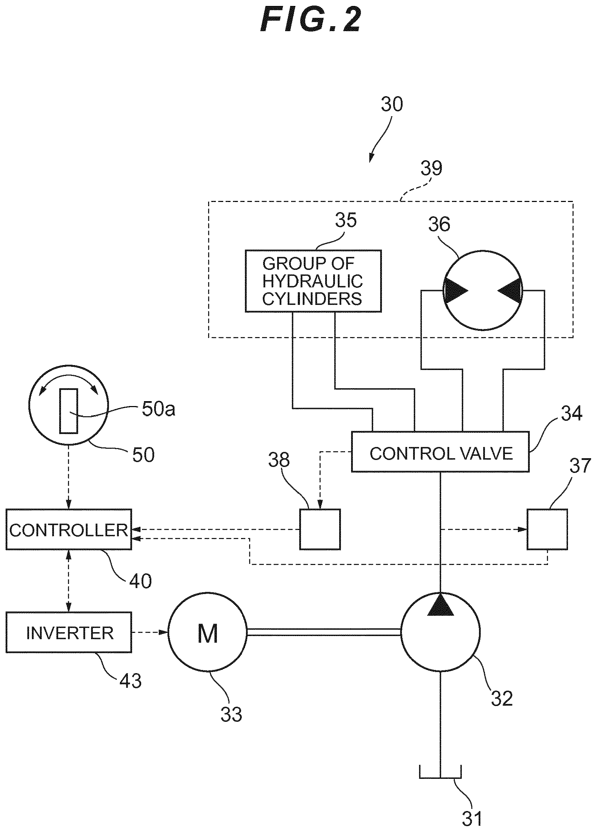

The operating device 17 is provided with operating levers (not shown) and a rotatably operated knob 50 for performing operations of the power shovel 1 such as travel and excavation. By sitting in the operator seat 16 and operating the operating levers, the driver can control the driving of the group of hydraulic cylinders 35 and the traveling motor 36 to cause the power shovel 1 to travel, and can control the actuation of the shovel mechanism 12 to perform excavation and other work. The knob 50 comprises a handle 50a (see FIG. 2) that can be operated by pressure in order to allow rotatable operation. By rotating the knob 50 while pressing the handle 50a, the driver can adjust the pressure difference between the hydraulic oil pressure needed by the group of hydraulic cylinders 35 and traveling motor 36 and the discharge pressure of a hereinafter-described hydraulic pump 32, and can switch between a power mode and an energy conservation mode which are described hereinafter.

The power shovel 1 is also provided with a hydraulic pressure control device 30 for supplying hydraulic oil to, and actuating, the group of hydraulic cylinders 35 and traveling motor 36. The hydraulic pressure control device 30 in the present embodiment uses a hydraulic circuit known as a load sensing circuit which discharges hydraulic oil only in a flow rate needed for the requirements of the group of hydraulic cylinders 35 and the traveling motor 36. In the case of a load sensing hydraulic circuit, the maximum pressure (load pressure) of the hydraulic oil provided to the group of hydraulic cylinders 35 and the traveling motor 36 is fed back to the hydraulic pump 32, and the flow rate and discharge pressure of the hydraulic pump 32 are controlled so that the pressure difference between the maximum pressure and the discharge pressure of the hydraulic pump 32 reaches a specific value. When no operation is being performed, the minimum amount (idling oil amount) of hydraulic oil is discharged.

The hydraulic pressure control device 30 in the present embodiment uses a system in which a detection value of hydraulic oil pressure is converted to an electric signal and the rotating speed of the electric motor 33 is established and controlled by a controller 40 described hereinafter, unlike a system in which the hydraulic oil pressure is directly fed back to the hydraulic pump 32 to perform control of the flow rate and other characteristics of the hydraulic pump 32. The hydraulic pressure control device 30 is described below with reference to FIG. 2. In FIG. 2, hydraulic circuits are shown in solid lines, and electrical or optical signal circuits are shown in dashed-line arrows.

The hydraulic pressure control device 30 is configured comprising a tank 31, the hydraulic pump 32, the electric motor 33, a control valve 34, the group of hydraulic cylinders 35 and traveling motor 36 described above, a discharge pressure sensor 37, a hydraulic oil pressure sensor 38, the controller 40, an inverter 43, and the knob 50. The description hereinbelow refers to the group of hydraulic cylinders 35 and the traveling motor 36 collectively as a hydraulic actuator 39.

The tank 31 stores hydraulic oil, and the hydraulic pump 32 discharges the hydraulic oil at a predetermined hydraulic pressure and a predetermined flow rate. The hydraulic pump 32 is a fixed displacement hydraulic pump. The electric motor 33 is provided in order to rotatably drive the hydraulic pump 32, and along with the rotatable driving of the electric motor 33, the hydraulic pump 32 is also rotatably driven and hydraulic oil is discharged from the hydraulic pump 32. The electric motor 33 is an AC electric motor which receives AC power from the inverter 43 and which is rotatably driven at a rotational speed set by the controller 40. The control valve 34 performs control for supplying the hydraulic oil discharged from the hydraulic pump 32 to the hydraulic actuator 39 in a supply direction and supply amount according to the operation of the operating device 17. The discharge pressure sensor 37, being provided to the oil passage of the hydraulic oil discharged from the hydraulic pump 32, detects the hydraulic pressure (discharge pressure) of the discharged hydraulic oil, and the hydraulic oil pressure sensor 38, being provided to the oil passage of the control valve 34, detects the hydraulic oil pressure (load pressure) of the hydraulic actuator 39. The inverter 43 converts DC power obtained from a battery (not shown) or the like to AC power, and supplies the converted AC power to the electric motor 33. The controller 40 functions from DC power from the battery (not shown) or the like, and provides comprehensive control over vehicle travel, excavation, and the like, which includes controlling parameters such as the amount of AC power supplied to the electric motor 33 by the inverter 43.

The hydraulic pressure detected by the discharge pressure sensor 37 and the hydraulic oil pressure sensor 38 is converted to an electric signal and outputted to the controller 40. The controller 40 can thus detect the discharge pressure of the hydraulic pump 32 and the hydraulic oil pressure of the hydraulic actuator 39. Based on the detected discharge pressure and hydraulic oil pressure, the controller 40 generates a control signal and transmits the control signal to the inverter 43 so that factors such as the discharge pressure of the hydraulic pump 32 reach the optimal state. The inverter 43 supplies the AC power to the electric motor 33 on the basis of the received control signal.

Based on the load pressure of the hydraulic actuator 39 detected by the hydraulic oil pressure sensor 38, the controller 40 in the present embodiment establishes the rotational speed of the electric motor 33 so that the pressure difference between the load pressure previously described and the discharge pressure of the hydraulic pump 32 detected by the discharge pressure sensor 37 is constantly at a specific value. The inverter 43 then supplies AC power to the electric motor 33 so that the electric motor 33 is rotatably driven at the rotational speed established by the controller 40, the amount of oil discharged from the hydraulic pump 32 fluctuates, and the discharge pressure is controlled.

When the operating device 17 is operated at times such as when excavation and other work are performed, the control valve 34 is opened in order to supply the needed hydraulic oil to the hydraulic actuator 39. The load pressure of the hydraulic actuator 39 thereby approaches the discharge pressure of the hydraulic pump 32, the pressure difference decreases, and the controller 40 therefore increases the rotational speed of the electric motor 33 and increases the discharge amount of the hydraulic pump 32. On the other hand, when the hydraulic actuator 39 needs only a small amount of hydraulic oil at times such as when no operation pertaining to the operating device 17 is performed, the control valve 34 is closed, there is a larger pressure difference between the load pressure of the hydraulic actuator 39 and the value of the discharge pressure of the hydraulic pump 32, and the controller 40 therefore reduces the rotational speed of the electric motor 33 and reduces the discharge rate of the hydraulic pump 32.

As described above, the controller 40 actuates so that the pressure difference between the load pressure of the hydraulic actuator 39 and the discharge pressure of the hydraulic pump 32 is a specific value, but the driver can vary the value of this pressure difference by operating the knob 50 explained above. Specifically, when the knob 50 is rotated clockwise, for example, so that the value of the pressure difference increases, the discharge pressure of the hydraulic pump 32 increases relative to the load pressure of the hydraulic actuator 39, and it thus becomes possible to output a greater amount of power (power mode). On the other hand, when the knob 50 is rotated counterclockwise, for example, so that the value of the pressure difference decreases, the discharge pressure of the hydraulic pump 32 is minimized relative to the load pressure of the hydraulic actuator 39, and energy can be conserved (energy conservation mode). The structure of the knob 50 is not limited to a rotating structure such as is described above, and a lever or another structure may also be used.

In the power shovel 1 in the present embodiment, in the hydraulic circuitry constituting the load sensing system, the discharge pressure of the hydraulic pump 32 is detected by the discharge pressure sensor 37 and the load pressure of the hydraulic actuator 39 is detected by the hydraulic oil pressure sensor 38. The controller 40 is capable of causing the electric motor 33 to rotate at the minimum required rotational speed by controlling the amount of electric power to the electric motor 33 and the rotational speed of the electric motor 33 so that the pressure difference between the above-described discharge pressure and the above-described load pressure is always constant. Consequently, the power consumption of the power shovel 1 is minimized, and energy conservation can be achieved. Because the controller 40 automatically performs the controls described above, there is no need for an auto-diesel device or the like for reducing the rotational speed when no work is being performed.

Because the hydraulic pressures detected by the discharge pressure sensor 37 and the hydraulic oil pressure sensor 38 are outputted as electric signals to the controller 40 and the controller 40 electrically processes the above-described detection results, the discharge pressure of the hydraulic pump 32 can be made to fluctuate smoothly, occurrences of hunting and the like can be minimized, and driver operability can be improved, in comparison with cases of feedback control by hydraulic pressure.

In the present embodiment, the power shovel 1 comprising the hydraulic pressure control device 30 was shown as an example of a construction machine, but application of the hydraulic pressure control device 30 is not limited to the power shovel 1. Specifically, the present invention can also be applied to vehicles for high lifting work, mobile cranes, forklifts, loaders, and the like.

### REFERENCE NUMERALS

- 1:: power shovel
- 17:: operating device (hydraulic actuator operating means)
- 30:: hydraulic pressure control device
- 32:: hydraulic pump
- 33:: electric motor
- 37:: discharge pressure sensor (discharge pressure detection means)
- 38:: hydraulic oil pressure sensor (hydraulic oil pressure detection means)
- 39:: hydraulic actuator
- 40:: controller (hydraulic pressure control means)
- 43:: inverter (electric power supply means)
- 50:: knob (pressure difference operation means)

## Claims

1. A hydraulic pressure control device comprising:
a hydraulic pump (32) for discharging hydraulic oil;
an electric motor (33) for driving the hydraulic pump (32);
at least one hydraulic actuator (35, 36) driven by the hydraulic oil discharged from the hydraulic pump (32);
hydraulic actuator operation means (34) operable to control actuation of the at least one hydraulic actuator (35, 36);
discharge pressure detection means (37) for detecting the discharge pressure of the hydraulic oil discharged by the hydraulic pump (32);
hydraulic oil pressure detection means (38) for detecting the hydraulic oil pressure of the hydraulic actuator (35, 36);
electric power supply means (43) for supplying electric power to the electric motor (33) and driving the electric motor; and
a controller (40) for determining a pressure difference between the discharge pressure of the hydraulic pump (32) detected by the discharge pressure detection means (37) and the hydraulic oil pressure of the hydraulic actuator (35, 36) detected by the hydraulic oil pressure detection means (38), and for controlling the supply of electric power to the electric motor (40) by the electric power supply means so that the pressure difference reaches a predetermined set value, to control the driving of the hydraulic pump (32) by the electric motor (33),
**characterized in that** the hydraulic pressure control device further comprises pressure difference operation means (50) operable in order to variably set the set value, and configured so that information showing the set value set by the operation of the pressure difference operation means is sent to the controller (40);
the controller being adapted to control the supply of electric power to the electric motor (33) by the electric power supply means (43) to control the driving of the hydraulic pump (32) by the electric motor so that the pressure difference between the discharge pressure of the hydraulic pump detected by the discharge pressure detection means (37) and the hydraulic oil pressure of the hydraulic actuator detected by the hydraulic oil pressure detection means (38) reaches the set value that has been set by the operation of the pressure difference operation means.

2. The hydraulic pressure control device according to claim 1, **characterized in that** the pressure difference operation means comprises a knob (50) adapted to adjust the pressure difference and a handle (50a) operable by the operator to allow rotation of the knob (50).

3. The hydraulic pressure control device according to claim 1, **characterized in that** the knob is adapted to be pressed and to be rotated in the depressed position to allow switching between a power mode and an energy conservation mode.

4. The hydraulic pressure control device according to claim 1, 2 or 3, **characterized in that**
the electric motor (33) is an AC electric motor;
the electric power supply meanscomprises a battery for supplying a DC current, and an inverter (43) for converting the DC current of the battery to an AC current and for controlling electric power supply to the AC electric motor (33), and
that the controller controls the electric power supply by the inverter to control rotation driving of the AC electric motor.

5. Construction machine, comprising a hydraulic pressure control device according to any of claims 1 - 4.

## Patentansprüche

1. Hydraulische Drucksteuervorrichtung, umfassend:
eine Hydraulikpumpe (32) zum Fördern von Hydrauliköl;
einen Elektromotor (33) zum Antreiben der Hydraulikpumpe (32);
mindestens einen Hydraulikaktuator (35, 36), der durch das aus der Hydraulikpumpe (32) geförderte Hydrauliköl angetrieben wird;
eine Hydraulikaktuatorbetriebseinrichtung (34), die zum Steuern der Betätigung des mindestens einen Hydraulikaktuator (35, 36) betreibbar ist;
eine Förderdruckerfassungseinrichtung (37) zum Erfassen des Förderdrucks des durch die Hydraulikpumpe (32) geförderten Hydrauliköls;
eine Hydrauliköldruckerfassungseinrichtung (38) zum Erfassen des Hydrauliköldrucks des Hydraulikaktuators (35, 36);
eine Stromversorgungseinrichtung (43) zum Versorgen des Elektromotors (33) mit elektrischem Strom und zum Antreiben des Elektromotors; und
eine Steuervorrichtung (40) zum Bestimmen einer Druckdifferenz zwischen dem durch die Förderdruckerfassungseinrichtung (37) erfassten Förderdruck der Hydraulikpumpe (32) und dem durch die Hydrauliköldruckerfassungseinrichtung (38) erfassten Hydrauliköldruck des Hydraulikaktuators (35, 36) und zum Steuern der Stromversorgung des Elektromotors (40) durch die Stromversorgungseinrichtung, sodass die Druckdifferenz einen vorbestimmten Sollwert erreicht, um den Antrieb der Hydraulikpumpe (32) durch den Elektromotor (33) zu steuern,
**dadurch gekennzeichnet, dass** die hydraulische Drucksteuervorrichtung ferner eine Druckdifferenzbetriebseinrichtung (50) umfasst, die dazu betreibbar ist, den Sollwert variabel einzustellen, und dazu ausgelegt ist, Informationen, die den durch den Betrieb der Druckdifferenzbetriebseinrichtung eingestellten Sollwert anzeigen, an die Steuervorrichtung (40) gesendet werden;
die Steuervorrichtung dazu ausgelegt ist, die Zufuhr von elektrischer Energie an den Elektromotor (33) durch die Stromversorgungseinrichtung (43) zu steuern, um den Antrieb der Hydraulikpumpe (32) durch den Elektromotor so zu steuern, dass die Druckdifferenz zwischen dem durch die Förderdruckerfassungseinrichtung (37) erfassten Förderdruck der Hydraulikpumpe und dem durch die Hydrauliköldruckerfassungseinrichtung (38) erfassten Hydrauliköldruck des Hydraulikaktuators den durch den Betrieb der Druckdifferenzbetriebseinrichtung eingestellten Sollwert erreicht.

2. Hydraulische Drucksteuervorrichtung gemäß Anspruch 1, **dadurch gekennzeichnet, dass** die Druckdifferenzbetriebseinrichtung einen Knopf (50), der zum Einstellen der Druckdifferenz geeignet ist, und einen Griff (50a) umfasst, der durch den Bediener betätigbar ist, um die Drehung des Knopfes (50) zu ermöglichen.

3. Hydraulische Drucksteuervorrichtung gemäß Anspruch 1, **dadurch gekennzeichnet, dass** der Knopf dazu geeignet ist, gedrückt und in der gedrückten Stellung gedreht zu werden, um zwischen einem Leistungsmodus und einem Energiesparmodus zu schalten.

4. Hydraulische Drucksteuervorrichtung gemäß Anspruch 1, 2 oder 3, **dadurch gekennzeichnet, dass**
der Elektromotor (33) ein Wechselstromelektromotor ist;
die Stromversorgungseinrichtung eine Batterie zum Liefern eines Gleichstroms und einen Wechselrichter (43) zum Umwandeln des Gleichstroms der Batterie in Wechselstrom und zum Steuern der Stromzufuhr an den Wechselstromelektromotor (33) umfasst, und
dass die Steuervorrichtung die Stromversorgung durch den Wechselrichter steuert, um den Drehantrieb des Wechselstromelektromotors zu steuern.

5. Baumaschine, umfassend eine hydraulische Drucksteuervorrichtung gemäß einem der Ansprüche 1 - 4.

## Revendications

1. Dispositif de commande de pression hydraulique, comprenant :
une pompe hydraulique (32) pour évacuer de l'huile hydraulique ;
un moteur électrique (33) pour entraîner la pompe hydraulique (32) ;
au moins un actionneur hydraulique (35, 36) entraîné par l'huile hydraulique évacuée de la pompe hydraulique (32) ;
un moyen d'activation d'actionneur hydraulique (34) pouvant être activé pour commander l'actionnement de l'au moins un actionneur hydraulique (35, 36) ;
un moyen de détection de pression d'évacuation (37) pour détecter la pression d'évacuation de l'huile hydraulique évacuée par la pompe hydraulique (32) ;
un moyen de détection de pression d'huile hydraulique (38) pour détecter la pression d'huile hydraulique de l'actionneur hydraulique (35, 36) ;
un moyen d'alimentation en énergie électrique (43) pour alimenter en énergie électrique le moteur électrique (33) et entraîner le moteur électrique ; et
un dispositif de commande (40) pour déterminer une différence de pression entre la pression d'évacuation de la pompe hydraulique (32) détectée par le moyen de détection de pression d'évacuation (37) et la pression d'huile hydraulique de l'actionneur hydraulique (35, 36) détectée par le moyen de détection de pression d'huile hydraulique (38), et pour commander l'alimentation en énergie électrique au moteur électrique (40) par le moyen d'alimentation en énergie électrique de sorte que la différence de pression atteint une valeur de consigne prédéterminée, pour commander l'entraînement de la pompe hydraulique (32) par le moteur électrique (33),
**caractérisé en ce que le** dispositif de commande de pression hydraulique comprend en outre un moyen d'activation de différence de pression (50) pouvant être activé pour définir de manière variable la valeur de consigne, et configuré de sorte que des informations affichant la valeur de consigne définie par l'activation du moyen d'activation de différence de pression sont envoyées au dispositif de commande (40) ;
le dispositif de commande étant conçu pour commander l'alimentation en énergie électrique au moteur électrique (33) par le moyen d'alimentation en énergie électrique (43) pour commander l'entraînement de la pompe hydraulique (32) par le moteur électrique de sorte que la différence de pression entre la pression d'évacuation de la pompe hydraulique détectée par le moyen de détection de pression d'évacuation (37) et la pression d'huile hydraulique de l'actionneur hydraulique détectée par le moyen de détection de pression d'huile hydraulique (38) atteint la valeur de consigne qui a été définie par l'activation du moyen d'activation de différence de pression.

2. Dispositif de commande de pression hydraulique selon la revendication 1, **caractérisé en ce que** le moyen d'activation de différence de pression comprend un bouton (50) conçu pour ajuster la différence de pression et une poignée (50a) pouvant être actionnée par l'opérateur pour permettre une rotation du bouton (50).

3. Dispositif de commande de pression hydraulique selon la revendication 1, **caractérisé en ce que** le bouton est conçu pour être pressé et pour être tourné dans la position enfoncée pour permettre une commutation entre un mode d'énergie et un mode d'économie d'énergie.

4. Dispositif de commande de pression hydraulique selon la revendication 1, 2 ou 3, **caractérisé en ce que**
le moteur électrique (33) est un moteur électrique CA ;
le moyen d'alimentation en énergie électrique comprend une batterie pour alimenter un courant CC, et un onduleur (43) pour convertir le courant CC de la batterie en un courant CA et pour commander l'alimentation en énergie électrique au moteur électrique CA (33), et
**en ce que** le dispositif de commande commande l'alimentation en énergie électrique par l'onduleur pour commander l'entraînement en rotation du moteur électrique CA.

5. Machine de construction, comprenant un dispositif de commande de pression hydraulique selon l'une quelconque des revendications 1 à 4.
